# EUROPÄISCHE PATENTSCHRIFT

(11) **EP 1 205 101 B1**
(45) Veröffentlichungstag und Bekanntmachung des Hinweises auf die Patenterteilung: **15.02.2006**
(21) Anmeldenummer: 01126270.6
(22) Anmeldetag: 06.11.2001
(51) Int. Cl.: A01D 61/00

(54) **Lagerungszusammenbau eines Fingers**
Bearing arrangement for a finger
Arrangement de palier d'un doigt

(30) Priorität: 10.11.2000 US 710387
(43) Veröffentlichungstag der Anmeldung: 15.05.2002
(73) Patentinhaber: DEERE & COMPANY, Moline, Illinois 61265-8098 (US)
(72) Erfinder: Gall, Scott T., Davenport, IA 52807 (US); Sheedy, Ronald Leo, Eldridge, IA 52748 (US)
(74) Vertreter: Holst, Sönke

(56) Entgegenhaltungen:
- EP-A- 0 371 372
- EP-A- 1 040 749
- US-A- 4 271 956

## Beschreibung

Die Erfindung betrifft einen Lagerungszusammenbau zur schwenkbaren Lagerung eines Fingers auf einem exzentrischen Achsabschnitt, mit einer ersten und einer zweiten Lagerhälfte, die jeweils einen Lagerabschnitt mit einer inneren Lageroberfläche aufweisen und in eine geschlossene Stellung verbringbar sind, in der die Lageroberflächen eine Öffnung zur Aufnahme des Achsabschnitts definieren, wobei die Lagerhälften jeweils einen zur Aufnahme eines Endabschnitts eines Fingers eingerichteten Fingerhalterabschnitt aufweisen und durch Schwenkmittel zwischen der geschlossenen und einer geöffneten Stellung um eine Scharnierachse schwenkbar sind.

Es ist üblich, bei Schneidwerken für Erntemaschinen den Übergang des geernteten Gutes in einen Schrägförderer mit einem das Gut zusammenführenden Schneckenförderer zu unterstützen, der wendelförmige Förderelemente aufweist, um Gut von den seitlichen Enden des Schneidwerks zur Mitte des Schneidwerks zu fördern und dem Schrägförderer aufzugeben. Der mittlere Abschnitt des Schneckenförderers unmittelbar vor dem Schrägförderer ist mit einer Anordnung sich drehender und zurückziehender Finger versehen, bei der eine exzentrisch angeordnete Achse innerhalb des drehenden Rohrs des Schneckenförderers positioniert ist. Langgestreckte Finger sind auf der exzentrischen Achse drehbar gelagert und erstrecken sich im wesentlichen radial durch Führungsschlitze in der Oberfläche des Rohrs, so dass sich die Finger, wenn sich das Rohr dreht, um die Achse drehen und - wegen der Exzentrizität der Achse relativ zum Rohr - in den Führungsschlitzen hin- und herbewegt werden. Die Anordnung ist derart gestaltet, dass die Finger aus dem Rohr heraus kommen, um Erntegut zu ergreifen und es unter dem Rohr hindurch in den Schrägförderer zu fördern, und sich danach zurückziehen, um die Freigabe des vom Schrägförderer erfaßten Materials zu erleichtern.

Der Lagerungszusammenbau jedes Fingers umfasst erste und zweite Lagerhälften, s. beispielsweise EP 1 040 749 A. Die Lagerhälften sind durch einen Schwenkstift oder Scharnierstift aneinander gekoppelt, damit sich die Lagerhälften zwischen geöffneten und geschlossenen Positionen bewegen können. In der geöffneten Position können die Lagerhälften um die exzentrisch angeordnete Achse herumgelegt werden. Der Lagerungszusammenbau wird dann auf der Achse und um einen Finger herum geschlossen und an dem Finger befestigt, um zu verhindern, dass der Lagerungszusammenbau geöffnet wird.

Es ist möglich, dass sich der Scharnierstift aus den Lagerhälften herausarbeitet, was ermöglicht, dass sich der Lagerungszusammenbau innerhalb des Rohrs des Schneckenförderers zerlegt. Es ist dann nötig, den Betrieb der Erntemaschine anzuhalten, um den Lagerungszusammenbau wieder zusammenzusetzen, bevor dem Schneckenförderer übermäßiger Schaden zugefügt wird.

Die der Erfindung zugrunde liegende Aufgabe wird darin gesehen, eine verbesserte, haltbarere Lageranordnung für einen Finger bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, die Schwenkmittel des einen Finger halternden Lagerungszusammenbaus derart zu gestalten, dass die Lagerhälften genau dann voneinander trennbar sind, wenn die Lagerungshälften sich in der geöffneten Stellung befinden. In der geschlossenen Stellung sind die Lagerhälften aneinander durch die Schwenkmittel befestigt. Auf diese Weise können die Lagerhälften zusammengefügt oder getrennt werden, wenn sie sich relativ zueinander in der geöffneten Stellung befinden. Aus dieser geöffneten Stellung können die Lagerhälften relativ zueinander um die Scharnierachse in die geschlossene Stellung rotiert werden, in der die Lagerhälften eine zylindrische Öffnung für den exzentrischen Achsabschnitt formen. In dieser geschlossenen Stellung sind die Lagerhälften durch die Schwenkmittel aneinander und um die Scharnierachse drehbar befestigt und können nicht an der Scharnierachse voneinander getrennt werden.

Die Lagerhälften weisen jeweils einen Lagerabschnitt mit einer inneren Lageroberfläche mit halbkreisförmigem Querschnitt auf, so dass die Lagerhälften in ihrer geschlossenen Stellung eine zylindrische Öffnung definieren, die schwenkbar auf einem exzentrisch angeordneten Achsabschnitt anordenbar ist. Ein Scharnierabschnitt ist in der Regel vom Lagerabschnitt in einer Richtung beabstandet, die radial zur Öffnung verläuft. Der Scharnierabschnitt besteht aus Schwenkabschnitten, die vorzugsweise entlang der sich parallel zur Achse der zylindrischen Öffnung, die durch die zwei Lageroberflächen gebildet wird, erstreckenden Scharnierachse voneinander beabstandet sind. Die Schwenkabschnitte der beiden Lagerhälften sind untereinander schwenkbar verbunden. In der Regel weist jede Lagerhälfte zwei Schwenkabschnitte auf, obwohl auch eine höhere Anzahl möglich wäre. Denkbar wäre auch, eine Lagerhälfte mit nur einem Schwenkabschnitt auszustatten, der zwischen zwei Schwenkabschnitten der anderen Lagerhälfte angeordnet ist.

Vorzugsweise sind die Schwenkabschnitte um einen Abstand voneinander beabstandet, der etwa der axialen Dicke jedes der Schwenkabschnitte entspricht.

In einer bevorzugten Ausführungsform der Erfindung sind die Schwenkmittel mit den Scharnierabschnitten der Lagerhälften einteilig geformt. Ein separater Lagerstift für die Schwenklagerung ist somit nicht mehr erforderlich, was die Montage vereinfacht. Auch kann er nicht mehr in unerwünschter Weise herausfallen.

Zweckmäßigerweise werden die Lagerhälften aneinander befestigt, beispielsweise durch eine Schraube und eine Mutter, sobald sie zusammengebaut sind und ein Finger angebracht wurde, um zu verhindern, dass sich die Lagerhälften wieder in die geöffnete Stellung zurückdrehen, in der die Lagerhälften am Scharnierabschnitt trennbar sind.

Vorzugsweise besteht ein erfindungsgemäßer Lagerungszusammenbau aus zwei miteinander identischen Lagerhälften.

In einer bevorzugten Ausführungsform der Erfindung ist ein Schwenkabschnitt mit einer Zunge versehen, die sich in axialer Richtung (d. h. entlang der Scharnierachse) vom Schwenkabschnitt fort erstreckt. Der benachbarte Schwenkabschnitt der anderen Lagerhälfte weist eine mittige Ausnehmung auf, die sich axial in einer Oberfläche des Schwenkabschnitts erstreckt. Ein radialer Schlitz erstreckt sich von der Ausnehmung radial nach außen. Der Schlitz eines Schwenkabschnitts ist mit der Zunge des anderen Schwenkabschnitts ausgerichtet, so dass die Zunge einer Lagerhälfte durch den Schlitz der anderen Lagerhälfte hindurch und in die Ausnehmung hinein geführt werden kann, wenn die zwei Lagerhälften zusammengesetzt werden, was nur in der geöffneten Stellung möglich ist. Sobald die Zunge in die Ausnehmung eingeführt ist, können die Lagerhälften relativ zueinander gedreht werden, wobei jede Zunge in der Ausnehmung der anderen Lagerhälfte rotiert. Sobald die beiden Lagerhälften in einer geschlossenen Position zusammengefügt sind, sind die Zungen nicht mehr mit den Schlitzen ausgerichtet, so dass die Zungen in der axialen Ausnehmung festgehalten werden.

Der erfindungsgemäße Lagerungszusammenbau eignet sich insbesondere für einziehbare Finger, die sich durch ein Rohr eines Schneckenförderers erstrecken. Derartige Schneckenförderer werden bei Schneidwerken für Mähdrescher eingesetzt. Der Lagerungszusammenbau kann aber auch bei anderen Trommelförderern eingesetzt werden, beispielsweise bei solchen, die zur Gutauflockerung oberhalb von Strohschüttlern von Mähdreschern angebracht sind.

In den Zeichnungen ist ein nachfolgend näher beschriebenes Ausführungsbeispiel der Erfindung dargestellt. Es zeigt:
- Fig. 1: eine schematische Seitenansicht eines Schneidwerks und des Vorderteils eines Schrägförderers eines Mähdreschers, wobei das Schneidwerk einen Schneckenförderer enthält, in dem die vorliegende Erfindung verwirklicht ist;
- Fig. 2: eine vergrößerte, im wesentlichen von vorn aufgenommene, teilweise geschnittene Ansicht, in der der Mittelteil des Schneckenförderers und die generelle Anordnung der Finger wiedergegeben ist; .
- Fig. 3: eine Explosionszeichnung eines Lagerungszusammenbaus, in der die zwei Lagerhälften zum Kuppeln ausgerichtet sind;
- Fig. 4: eine perspektivische Ansicht eines zusammengebauten Lagerungszusammenbaus in geöffneter Position;
- Fig. 5: eine Seitenansicht des Lagerungszusammenbaus, der mit dem Finger auf der Achse montiert ist; und
- Fig. 6: eine Teilansicht von oben auf das Ende eines Fingers des Schneckenförderers.

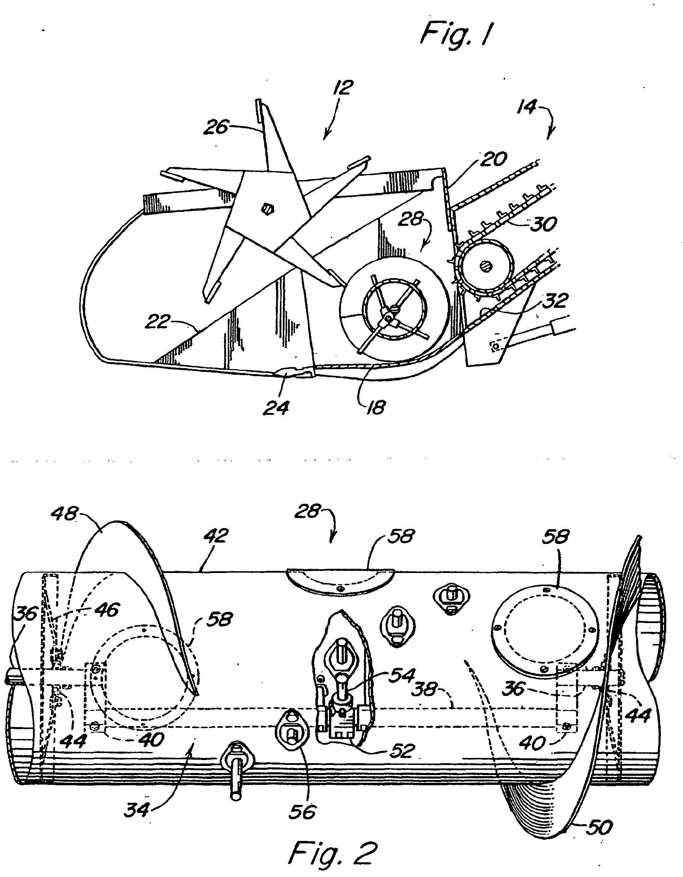

Die Erfindung wird im Schneckenförderer des ansonsten konventionellen, für die Getreideernte dienenden Schneidwerks 12 eines Mähdreschers verwendet, welches in Figur 1 in Seitenansicht dargestellt ist. Das Schneidwerk 12 ist am Schrägförderer 14 des Mähdreschers befestigt. Das Schneidwerk 12 besteht in seinem grundsätzlichen Aufbau aus einer vorn geöffneten Struktur, die einen Boden 18, eine Rückwand 20 und gegenüberliegende Seitenteile 22 aufweist. Ein Mähwerksbalken 24 erstreckt sich an der Vorderseite des Bodens 18 nach vorn und dient zum Abschneiden stehenden Ernteguts. Eine Haspel 26 dreht sich oberhalb des Mähwerksbalkens 24, um die Bewegung des Ernteguts auf den Mähwerksbalken 24 und über den vorderen Bereich des Bodens 18 zu steuern und das Erntegut mit einem Schneckenförderer 28 in Eingriff zu bringen.

Das Schneidwerk 12 ist wesentlich breiter als der Schrägförderer 14 und der Schneckenförderer 28 führt das geerntete Gut vom Mähwerksbalken 24 zusammen und transportiert es seitlich zur Mitte des Schneidwerks 12. Dort wird das Erntegut dem Schrägförderer 14 übergeben, wo es vom Förderer 30 des Schrägförderers 14 erfasst und über den Boden 32 des Schrägförderers 14 nach hinten und oben gefördert wird, um es der (nicht gezeigten) Dreschtrommel des Mähdreschers zuzuführen.

Viele Merkmale des Schneckenförderers 28 des Schneidwerks 12 sind konventionell, so dass seine generelle Form und Befestigung hier nur kurz beschrieben wird. Derartige Schneckenförderer 28 und ihr Betrieb sind wohlbekannt. Wie in Figur 2 dargestellt ist, wird der Schneckenförderer 28 drehbar von einer Achsanordnung 34 getragen, die gegenüberliegende koaxiale Achsabschnitte 36 und einen versetzten, exzentrischen Achsabschnitt 38 aufweist, der durch ein Paar von Armen 40 fest mit den Achsabschnitten 36 verbunden ist. Die an den gegenüberliegenden Enden des Schneckenförderers 28 angeordneten Achsabschnitte 36 sind an den Seitenteilen 22 des Schneidwerks 12 drehfest befestigt, wie es im Stand der Technik bekannt, aber nicht in den Zeichnungen dargestellt ist.

Der Aufbau des Schneckenförderers 28 umfaßt ein längliches, zylindrisches Rohr 42, das konzentrisch mit den Achsabschnitten 36 durch Lagerzusammenbauten 44 drehbar an den Achsabschnitten 36 gelagert ist, wobei die Lagerzusammenbauten 44 fest an der Innenseite des Rohrs 42 angebrachte Tragelemente 46 tragen, die insbesondere sternförmig sein können. Links bzw. rechts angeordnete wendelförmige Förderabschnitte 48, 50 des Schneckenförderers 28 mit jeweils gegenläufigem Sinn wirken mit dem Boden 18 und der Rückwand 20 des Schneidwerks 12 zusammen, wenn der Schneckenförderer 28 sich dreht, um Erntegut zur Mitte des Schneckenförderers 28 zu fördern. Eine Vielzahl von Lagerungszusammenbauten 52 mit Fingern ist am exzentrischen Achsabschnitt 38 befestigt. Jeder Lagerungszusammenbau 52 trägt einen Finger 54. Jeder Finger 54 erstreckt sich durch einen Führungszusammenbau 56, der in der Wand des Rohrs 42 befestigt ist. Entfernbare Deckel 58 ermöglichen einen Zugang ins Innere des Rohrs 42, um beispielsweise die Lagerungszusammenbauten 52 der Finger 54 warten zu können. Geeignete, konventionelle Antriebseinrichtungen, die nicht in der Zeichnung wiedergegeben sind, sind bereitgestellt, um den Schneckenförderer 28 auf den Achsabschnitten 36 zu drehen. Jeder Lagerungszusammenbau 52 umfasst zwei identische Lagerhälften 60.

Jede Lagerhälfte 60 besteht aus einem Lagerabschnitt 62, der eine innere, halbzylindrische Lageroberfläche 64 hat. An einem Ende des Lagerabschnitts 62 ist ein Fingerhalterabschnitt 66, der sich radial zur halbzylindrischen Lageroberfläche 64 erstreckt. Der Fingerhalterabschnitt 66 hat eine rechteckig geformte Ausnehmung 68 und eine in deren Nähe angeordnete halbzylindrische Ausnehmung 70, die zu einer äußeren Endoberfläche 72 führt. Eine Bohrung 74 erstreckt sich durch den Fingerhalterabschnitt 66 bis in die Ausnehmung 68.

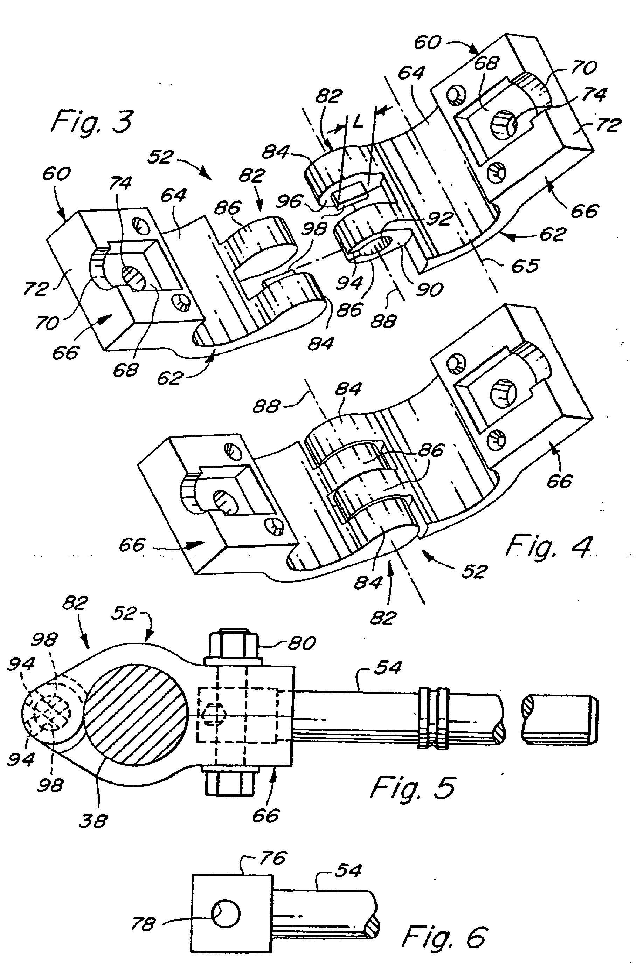

Anhand der Figur 6 ist erkennbar, dass der Finger 54 an einem Ende einen quadratischen Kopf 76 hat, der mit einer durchgehenden Bohrung 78 versehen ist. Der Kopf 76 des Fingers 54 wird in der Ausnehmung 68 platziert, wenn die Lagerhälften 60 um den Finger 54 herum geschlossen werden. Ein Zusammenbau mit Mutter und Schraube 80 erstreckt sich durch die Bohrungen 74 in den Lagerhälften 60 und die Bohrung 78 im Finger 54, um sowohl die Lagerhälften 60 in der geschlossenen Position zu halten als auch den Finger 54 am Lagerungszusammenbau 52 zu befestigen, wie in Figur 5 gezeigt. Andere Halterungselemente können verwendet werden, um die Lagerungshälften zusammenzuhalten, wie eine Hülse oder ein Deckel, der den Fingerhalterabschnitt 66 umrundet, wobei ein Federring o. ä. die Hülse an Ort und Stelle hält. Der geschlossene Lagerungszusammenbau 62 ist in Figur 5 gezeigt, wie er den exzentrischen Achsabschnitt 38 umschließt.

Jede Lagerhälfte 60 weist einen Scharnierabschnitt 82 auf, der sich vom Lagerabschnitt 64 in der vom Fingerhalterabschnitt 66 fort weisenden Richtung erstreckt. Der Scharnierabschnitt 82 jeder Lagerhälfte 60 umfasst ein Paar von Schwenkabschnitten 84 und 86. Wie unten beschrieben, definieren die Schwenkabschnitte 84, 86 eine Scharnierachse 88 für jeden Lagerungszusammenbau 52. Die Scharnierachse 88 ist parallel zu der Achse 65, die durch die halbzylindrische Lageroberfläche 64 definiert wird. Die zwei Scharnierabschnitte 82 sind entlang der Achse 88 um eine Entfernung beabstandet, die näherungsweise gleich der axialen Dicke jedes Schwenkabschnitts 84, 86 ist. Der Schwenkabschnitt 86 hat eine axiale Fläche 90, die mit einer kreisförmigen Ausnehmung 92 versehen ist, die konzentrisch zur Achse 88 ist. Ein radialer Schlitz 94 erstreckt sich von der Ausnehmung 92 nach außen. Der andere Schwenkabschnitt 84 hat eine Fläche 96, von der sich eine langgestreckte Zunge 98 erstreckt. Die Zunge 98 hat eine in Figur 3 gezeigte Länge "L", die geringfügig kürzer ist als der Durchmesser der Ausnehmung 92 im Schwenkabschnitt 86. Die Zunge 98 ist in der Längsrichtung mit dem Schlitz 94 ausgerichtet und die Dicke der Zunge 98 ist etwas geringer als die Breite des Schlitzes 94.

Zwei Lagerhälften 60 werden zusammengefügt, indem die Lagerhälften 60 zuerst orientiert werden, wie in Figur 3 dargestellt. Dort ist die Zunge 98 einer Lagerhälfte 60 mit dem Schlitz 94 der anderen Lagerhälfte 60 ausgerichtet. Die Lagerhälften 60 werden zusammenbewegt, indem die Zungen 98 durch die entsprechenden Schlitze 94 und in die Ausnehmungen 92 der anderen Lagerhälfte 60 eingeführt werden, so dass sie die in Figur 4 gezeigte Position einnehmen. Dies ist die geöffnete Position des Lagerungszusammenbaus 52. Die zwei Lagerhälften 60 drehen in der Art einer Klappmuschel relativ zueinander um die Scharnierachse 88 in die in Figur 5 gezeigte geschlossene Position. Die Lagerhälften 60 drehen sich etwa um 100 Grad relativ zueinander, so dass die Zungen 98 nicht mehr mit den entsprechenden Schlitzen 94 in der anderen Lagerhälfte 60 ausgerichtet sind, wie in Figur 5 gezeigt.

Die Struktur der Scharnierabschnitte 82 mit den Zungen 98 und den jeweiligen Schlitzen 94 und Ausnehmungen 92 ermöglichen, die Lagerhälften 60 zusammenzufügen und um eine Scharnierachse zu drehen, ohne dass ein separater Scharnierstift erforderlich wäre. Solange die zwei Lagerhälften 60 nicht in die geöffnete, in Figur 4 dargestellte Position gedreht werden, können die zwei Lagerhälften 60 nicht voneinander getrennt werden. Die Schwenkabschnitte 84 und 86 bilden gemeinsam mit ihren Zungen 98, Ausnehmungen 92 und Schlitzen 94 integrierte Schwenkmittel, um die Lagerhälften 60 aneinander um eine Scharnierachse 88 zwischen einer geöffneten und einer geschlossenen Stellung drehbar zu koppeln, wobei die Lagerhälften 60 in der geöffneten Stellung voneinander getrennt werden können, jedoch nicht in der geschlossenen Stellung. Die Schwenkmittel koppeln die Lagerhälften 60 aneinander.

## Patentansprüche

1. Lagerungszusammenbau (52) zur schwenkbaren Lagerung eines Fingers (54) auf einem exzentrischen Achsabschnitt (38), mit einer ersten und einer zweiten Lagerhälfte (60), die jeweils einen Lagerabschnitt (62) mit einer inneren Lageroberfläche (64) aufweisen und in eine geschlossene Stellung verbringbar sind, in der die Lageroberflächen (64) eine Öffnung zur Aufnahme des Achsabschnitts (38) definieren, wobei die Lagerhälften (60) jeweils einen zur Aufnahme eines Endabschnitts eines Fingers (54) eingerichteten Fingerhalterabschnitt (66) aufweisen und durch Schwenkmittel zwischen der geschlossenen und einer geöffneten Stellung um eine Scharnierachse (88) schwenkbar sind, **dadurch gekennzeichnet, dass** die Schwenkmittel derart gestaltet sind, dass die Lagerhälften (60) in der geöffneten Stellung voneinander trennbar und in der geschlossenen Stellung aneinander befestigt sind.

2. Lagerungszusammenbau (52) nach Anspruch 1, **dadurch gekennzeichnet, dass** die Schwenkmittel der Lagerhälften (60) jeweils einen Scharnierabschnitt (82) umfassen, die je mindestens einen Schwenkabschnitt (84, 86) aufweisen.

3. Lagerungszusammenbau (52) nach Anspruch 2, **dadurch gekennzeichnet, dass** der Schwenkabschnitt (84, 86) vom Lagerabschnitt (62) in einer im Wesentlichen radial zur Öffnung verlaufenden Richtung beabstandet ist.

4. Lagerungszusammenbau (52) nach Anspruch 2 oder 3, **dadurch gekennzeichnet, dass** die Scharnierabschnitte (82) je zwei vom Lagerabschnitt (62) beabstandete Schwenkabschnitte (84, 86) aufweisen, die voneinander entlang der Scharnierachse (88), die sich parallel zur Achse (65) der Öffnung erstreckt, um einen Abstand beabstandet sind, der näherungsweise gleich der axialen Dicke jedes Schwenkabschnitts (84, 86) ist.

5. Lagerungszusammenbau (52) nach einem der Ansprüche 2 bis 4, **dadurch gekennzeichnet, dass** die Schwenkmittel mit den Scharnierabschnitten (82) einteilig sind.

6. Lagerungszusammenbau (52) nach einem der Ansprüche 1 bis 5, **dadurch gekennzeichnet, dass** Mittel zum Festhalten der ersten und zweiten Lagerhälfte (60) in der geschlossenen Position vorgesehen sind, um eine Drehung der Lagerhälften (60) um die Scharnierachse (88) in die geöffnete Stellung, in der die Lagerhälften (60) trennbar sind, zu verhindern.

7. Lagerungszusammenbau (52) nach einem der Ansprüche 1 bis 6, **dadurch gekennzeichnet, dass** die erste und zweite Lagerhälfte (60) im Wesentlichen identisch sind.

8. Lagerungszusammenbau (52) nach einem der Ansprüche 2 bis 7, **dadurch gekennzeichnet, dass** ein Schwenkabschnitt (84) einer Lagerhälfte (60) eine sich axial von ihm fort erstreckende Zunge (98) und ein Schwenkabschnitt (86) der anderen Lagerhälfte (60) eine kreisförmige Ausnehmung (92) aufweist, die axial und konzentrisch zur Scharnierachse (88) in den Schwenkabschnitt (86) hineinragt, und dass ein Schlitz (84) sich radial von der Ausnehmung (92) fort erstreckt, um es der Zunge (98) einer Lagerhälfte (60) zu ermöglichen, durch den Schlitz (84) in der anderen Lagerhälfte (60) geschoben zu werden, wenn die erste und zweite Lagerhälfte (60) sich in der geöffneten Stellung befinden, und die Zunge (98) nicht mehr mit dem Schlitz (84) ausgerichtet ist, wenn die erste und zweite Lagerhälfte (60) in die geschlossene Stellung verdreht sind, so dass die Lagerhälften (60) dann nicht mehr voneinander trennbar sind.

9. Schneckenförderer (28) mit wenigstens einem Lagerungszusammenbau (52) nach einem der vorherigen Ansprüche.

## Claims

1. Bearing arrangement (52) for the swivel mounting of a finger (54) on an eccentric axle section (38), with a first and a second bearing half (60), each of which have a bearing section (62) with an inner bearing surface (64) and can be moved into a closed position, in which the bearing surfaces (64) define an opening to receive the axle section (38), wherein the bearing halves (60) each have a finger holder section (66) fitted to receive an end section of a finger (54) and through a swivelling means are able to swivel between the closed and an open position around a hinge axis (88), **characterised in that** the swivelling means are configured so that the bearing halves (60) are separable from one another in the open position and are fastened to one another in the closed position.

2. Bearing arrangement (52) according to Claim 1, **characterised in that** the swivelling means of the bearing halves (60) each comprise a hinge section (82), which each have at least one swivelling section (84, 86).

3. Bearing arrangement (52) according to Claim 2, **characterised in that** the swivelling section (84, 86) is spaced from the bearing section (62) in a direction running essentially radially to the opening.

4. Bearing arrangement (52) according to Claim 2 or 3, **characterised in that** the hinge sections (82) each have two swivelling sections (84, 86), which are spaced from the bearing section (62) and are spaced from one another along the hinge axis (88), which extends parallel to the axis (65) of the opening, at a distance, which is approximately equal to the axial thickness of each swivelling section (84, 86).

5. Bearing arrangement (52) according to one of Claims 2 to 4, **characterised in that** the swivelling means form a single part with the hinge sections (82).

6. Bearing arrangement (52) according to one of Claims 1 to 5, **characterised in that** means for firmly holding the first and second bearing half (60) in the closed position are provided to prevent a rotation of the bearing halves (60) around the hinge axis (88) into the open position, in which the bearing halves (60) are separable.

7. Bearing arrangement (52) according to one of Claims 1 to 6, **characterised in that** the first and second bearing halves (60) are essentially identical.

8. Bearing arrangement (52) according to one of Claims 2 to 7, **characterised in that** a swivelling section (84) of one bearing half (60) has a tongue (98) extending axially away from it, and a swivelling section (86) of the other bearing half (60) has a circular recess (92), which projects into the swivelling section (86) axially and concentrically to the hinge axis (88), and that a slot (84) extends radially away from the recess (92) to enable the tongue (98) of one bearing half (60) to be pushed through the slot (84) in the other bearing half (60), when the first and second bearing half (60) are located in the open position, and the tongue (98) is no longer aligned with the slot (84) when the first and second bearing half (60) are rotated into the closed position, so that the bearing halves (60) are then no longer separable from one another.

9. Worm conveyor (28) with at least one bearing arrangement (52) according to one of the preceding claims.

## Revendications

1. Ensemble formant palier (52) pour le montage pivotant d'un doigt (54) sur un tronçon d'axe (38) excentré, comportant un premier et un deuxième demi-palier (60) qui comportent chacun une portion de support (62) avec une surface de support (64) intérieure et peuvent être amenés dans une position fermée, dans laquelle les surfaces de support (64) définissent une ouverture destinée à recevoir le tronçon d'axe (38), les demi-paliers (60) comportant chacun une partie de retenue (66) conçue pour recevoir une extrémité d'un doigt (54) et étant montés pivotants par des moyens de pivotement autour d'un axe de charnière (88) entre la position fermée et une position ouverte, **caractérisé en ce que** les moyens de pivotement sont conçus de telle sorte que les demi-paliers (60) peuvent être séparés l'un de l'autre dans la position ouverte et sont fixés l'un à l'autre dans la position fermée.

2. Ensemble formant palier (52) selon la revendication 1, **caractérisé en ce que** les moyens de pivotement des demi-paliers (60) sont formés chacun par une partie de charnière (82) dont chacune comporte au moins une partie de pivotement (84, 86).

3. Ensemble formant palier (52) selon la revendication 2, **caractérisé en ce que** la partie de pivotement (84, 86) est écartée de la portion de support (62) dans une direction sensiblement radiale par rapport à l'ouverture.

4. Ensemble formant palier (52) selon la revendication 2 ou 3, **caractérisé en ce que** les parties de charnière (82) comportent chacune deux parties de pivotement (84, 86), qui sont situées à distance de la portion de support (62) qui sont écartées l'une de l'autre le long de l'axe de charnière (88), qui est parallèle à l'axe (65) de l'ouverture, sur une distance qui est approximativement égale à l'épaisseur axiale de chaque partie de pivotement (84, 86).

5. Ensemble formant palier (52) selon l'une quelconque des revendications 2 à 4, **caractérisé en ce que** les moyens de pivotement sont réalisés d'un seul tenant avec les parties de charnière (82).

6. Ensemble formant palier (52) selon l'une quelconque des revendications 1 à 5, **caractérisé en ce qu'**il est prévu des moyens destinés à retenir le premier et le deuxième demi-palier (60) dans la position fermée, en vue d'empêcher une rotation des demi-paliers (60) autour de l'axe de charnière (88) dans la position ouverte, dans laquelle les demi-paliers (60) sont séparables.

7. Ensemble formant palier (52) selon l'une quelconque des revendications 1 à 6, **caractérisé en ce que** le premier et le deuxième demi-palier (60) sont sensiblement identiques.

8. Ensemble formant palier (52) selon l'une quelconque des revendications 2 à 7, **caractérisé en ce qu'**une partie de pivotement (84) de l'un des demi-paliers (60) comporte une patte (98) qui s'écarte de ce dernier dans le sens axial et une partie de pivotement (86) de l'autre demi-palier (60) comporte un évidement (92) circulaire qui pénètre axialement et concentriquement à l'axe de charnière (88) dans la partie de pivotement (86), et **en ce qu'**une fente (84) s'étend dans le sens radial à partir de l'évidement (92) pour permettre à la patte (98) de l'un des demi-paliers (60) de passer à travers la fente (84) dans l'autre demi-palier (60) lorsque le premier et le deuxième demi-palier (60) sont en position ouverte, et la patte (98) n'est plus alignée avec la fente (84) lorsque le premier et le deuxième demi-palier (60) ont été tournés dans la position fermée de telle sorte que les demi-paliers (60) ne peuvent alors plus être séparés l'un de l'autre.

9. Vis de transport (28) comportant au moins un ensemble formant palier (52) selon l'une quelconque des revendications précédentes.
